# EUROPEAN PATENT SPECIFICATION

(11) **EP 3 976 664 B1**
(45) Date of publication and mention of the grant of the patent: **03.12.2025**
(21) Application number: 20729058.6
(22) Date of filing: 28.05.2020
(51) Int. Cl.: C08F 2/18, C08F 10/02, C08F 110/02, C08F 210/16

(54) **SUSPENSION PROCESS FOR PREPARING ETHYLENE POLYMERS COMPRISING DRYING OF THE POLYMER PARTICLES**
SUSPENSIONSVERFAHREN ZUR HERSTELLUNG VON ETHYLENPOLYMEREN MIT TROCKNUNG DER POLYMERPARTIKEL
PROCÉDÉ DE SUSPENSION POUR LA PRÉPARATION DE POLYMÈRES D'ÉTHYLÈNE COMPRENANT LE SÉCHAGE DE PARTICULES DE POLYMÈRES

(30) Priority: 29.05.2019 EP 19177329
(43) Date of publication of application: 06.04.2022
(73) Proprietor: Basell Polyolefine GmbH, 50389 Wesseling (DE)
(72) Inventor: ROHRBACH, Peter, 65719 Hofheim /Ts. (DE); PERZLMEIER, Jürgen, 93333 Marching (DE); ASHTANA, Mudit, 2548 LM Den Haag (NL); PRANG, Harald, 50374 Erftstadt (DE); DAMM, Elke, 61118 Bad Vilbel (DE)
(74) Representative: LyondellBasell
(86) International application number: PCT/EP2020/064794
(87) International publication number: WO 2020/239887

(56) References cited:
- WO-A1-2012/028591
- WO-A1-2016/023973

## Description

### FIELD OF THE INVENTION

The present disclosure provides a process for preparing an ethylene polymer in a suspension polymerization in a polymerization reactor or a series of polymerization reactors. The present disclosure provides in particular a process for preparing an ethylene polymer in a suspension polymerization in a polymerization reactor or a series of polymerization reactors in which the obtained suspension of ethylene polymer particles in a suspension medium is transferred into a solid-liquid separator, in which the suspension is separated in wet ethylene polymer particles and mother liquor and the wet ethylene polymer particles are dried by contacting the particles with a gas stream.

### BACKGROUND OF THE INVENTION

Suspension processes for preparing ethylene polymers are established methods for producing ethylene polymers and, for example, disclosed in EP 0 905 152 A1 or WO 2012/028591 A1. Such processes are often carried out in a series of reactors and so allow to set different reaction conditions in the polymerization reactors and thereby to produce different polymer compositions in the individual polymerization reactors. Accordingly produced multimodal ethylene copolymers are characterized by having, for example, a good combination of product properties and processability. Suspension processes for preparing ethylene polymers commonly employ a hydrocarbon or a hydrocarbon mixture as diluent. The suspension medium, which forms the liquid or supercritical phase of the suspension, comprises, besides the diluent as main component, also further components like dissolved ethylene, comonomers, aluminum alkyls, and hydrogen and dissolved reaction products like oligomers and waxes. Principles of producing multi- modal ethylene copolymer in suspension in a series of reactors are, e.g., disclosed in F. Alt et al., Macromol. Symp. 2001, 163, 135-143.

For economic and ecological reasons, it is common practice to recycle not consumed components of the reaction mixture like the diluent or non-polymerized monomers or comonomers to the polymerization process. The separation of the produced polyethylene particles from the formed suspension results in wet ethylene polymer particles and separated suspension medium, the so-called mother liquor. The polymer particles are usually dried in a powder dryer using a hot gas stream such as a hot nitrogen stream. The hydrocarbons contained in the hot gas stream are thereafter separated from the hot gas stream and transferred into a liquid hydrocarbon recover stream, which is returned to the polymerization. It is possible to add the hydrocarbon recover stream to the mother liquor obtained after removing the prepared ethylene polymer particles from the produced suspension. However, to avoid issues with small polymer particles which might be entrained in the gas exiting from the powder dryer and end up in the hydrocarbon recover stream, it is established practice to recycle the hydrocarbon recover stream to the produced suspension prior to separating the ethylene polymer particles from the mother liquor.

The mother liquor can directly be recycled to the polymerization process. However, to remove side products of the polymerization reaction which are soluble in the suspension medium from the polymerization process, a part of the mother liquor has to be worked up. Another reason for working up the mother liquor can be that the suspension obtained after the final reactor of a series of polymerization reactors may contain components which should not be introduced into one of the previous polymerization reactors for producing polyethylenes with specific property combinations. For example, for preparing multimodal ethylene copolymers having a high ESCR, it is often needed that one of the polymerizations in one of the polymerization reactors is an ethylene homopolymerization and accordingly no comonomer should be present in the respective polymerization reactor. The mother liquor to be worked up is a multi-component mixture. Accordingly, various separation steps such as evaporation or distillation steps are needed to remove all unwanted components and to split up those constituents which are intended to be recycled to the polymerization process. For example, WO 2010/136202 A1 discloses a process in which a part of the mother liquor is evaporated. The heavy ends of this pre-distillation are fed to a wax removal unit in which the wax-rich hydrocarbon flow is concentrated to polyethylene wax. The overhead stream of the pre-distillation, for example wax-depleted diluent, is distilled in a diluent distillation column. Finally, the diluent is purified in adsorbers and fed back into the process.

Nonetheless, there is a need to provide a process for working up the mother liquor obtained by removing the prepared ethylene polymer particles from the produced suspension in an ethylene polymerization process, which work-up process not only gives purified diluent but which can also be carried out in an economical and energy efficient manner and minimizes the amount of mother liquor that is evaporated.

### SUMMARY OF THE INVENTION

The present disclosure provides a process for preparing an ethylene polymer in a suspension polymerization in a polymerization reactor or a series of polymerization reactors comprising
polymerizing ethylene or copolymerizing ethylene and one or more C₃-C₁₂-1-alkenes at temperatures of from 40 to 150°C and pressures of from 0.1 to 20 MPa in the presence of a polymerization catalyst and forming a suspension of ethylene polymer particles in a suspension medium comprising a hydrocarbon diluent,
transferring the suspension of ethylene polymer particles into a solid-liquid separator, in which the suspension is separated in wet ethylene polymer particles and mother liquor,
drying the wet ethylene polymer particles by contacting the particles with a gas stream and thereby forming a gas stream carrying a hydrocarbon load, and thereafter separating the hydrocarbon load from the gas stream and thereby forming a liquid hydrocarbon recover stream,
transferring a part of the mother liquor into a work-up section comprising an evaporator for producing a wax-depleted portion of the mother liquor and comprising a diluent distillation unit, which produces isolated diluent from the wax-depleted portion of the mother liquor, and
recycling at least a part of the isolated diluent produced in the diluent distillation unit to the polymerization reactor or the series of polymerization reactors,
wherein at least the majority of the hydrocarbon recover stream is transferred to the diluent distillation unit without passing the evaporator for producing the wax-depleted portion of the mother liquor.

In some embodiments, the hydrocarbon recover stream transferred to the diluent distillation unit is passed through a filter before being introduced into the diluent distillation unit.

In some embodiments, the filter is a backwash filter.

In some embodiments, the ethylene polymer particles, which are separated from the hydrocarbon recover stream by the backwash filter, are transferred by a part of the hydrocarbon recover stream to the suspension of ethylene polymer particles upstream of the solid-liquid separator.

In some embodiments, the hydrocarbon recover stream is formed by contacting the gas stream carrying the hydrocarbon load with a cooled liquid phase in a scrubber and withdrawing the hydrocarbon recover stream from the bottom of the scrubber, and the cooled liquid phase which is introduced into the scrubber for being contacted with the gas stream carrying the hydrocarbon load is a cooled part of the hydrocarbon recover stream withdrawn from the bottom of the scrubber.

In some embodiments, the work-up section additionally comprises a wax removal unit operated by direct steam distillation for removing wax from a hydrocarbon wax solution, which wax removal unit produces a gaseous hydrocarbon/steam mixture which is condensed and then separated, within a first liquid-liquid separator, into an aqueous phase and a hydrocarbon phase, and at least a part of the hydrocarbon phase obtained in the first liquid-liquid separator is transferred to the diluent distillation unit without passing the evaporator for producing the wax-depleted portion of the mother liquor.

In some embodiments, the part of the hydrocarbon phase obtained in the first liquid-liquid separator, which is transferred to the diluent distillation unit without passing the evaporator for producing the wax-depleted portion of the mother liquor, is directly transferred to the diluent distillation unit.

In some embodiments, the part of the hydrocarbon phase obtained in the first liquid-liquid separator, which is transferred to the diluent distillation unit without passing the evaporator for producing the wax-depleted portion of the mother liquor, is transferred to a second liquid-liquid separator and therein separated into a second aqueous phase and a second hydrocarbon phase and the second hydrocarbon phase is transferred to the diluent distillation unit.

In some embodiments, the second liquid-liquid separator is equipped with a coalescer.

In some embodiments, the aqueous phase withdrawn from the second liquid-liquid separation vessel is returned to the first liquid-liquid separation vessel.

In some embodiments, the prepared ethylene polymer is a multimodal ethylene copolymer.

In some embodiments, the preparation of the ethylene polymer is carried out in a series of polymerization reactors and an ethylene homopolymer is prepared in one of the polymerization reactors.

In some embodiments, the ethylene homopolymer is prepared in the first polymerization reactor of the series of polymerization reactors and a copolymer of ethylene is prepared in a subsequent polymerization reactor.

### BRIEF DESCRIPTION OF THE DRAWINGS

Figure 1 shows schematically a set-up for preparing ethylene polymers in suspension.
Figure 2 shows schematically a set-up for preparing ethylene polymers in suspension according to the process of the present disclosure.
Figure 3 shows schematically a further set-up for preparing ethylene polymers in suspension according to the process of the present disclosure.

### DETAILED DESCRIPTION OF THE INVENTION

The present disclosure provides a process for preparing an ethylene polymer in a suspension polymerization in a polymerization reactor or in a series of polymerization reactors. The ethylene polymers are prepared by polymerizing ethylene or copolymerizing ethylene and one or more C₃-C₁₂-1-alkenes in the presence of a polymerization catalyst. The C₃-C₁₂-1-alkenes may be linear or branched. Preferred C₃-C₁₂-1-alkenes are linear C₃-C₁₀-1-alkenes such as propylene, 1-butene, 1-pentene, 1-hexene, 1-heptene, 1-octene, or 1-decene or branched C₂-C₁₀-1-alkenes such as 4-methyl-1-penten. It is also possible to polymerize ethylene with mixtures of two or more C₃-C₁₂-1-alkenes. Preferred comonomers are C₃-C₈-1-alkenes, in particular 1-butene, 1-pentene, 1-hexene, 1-heptene and/or 1-octene. In prepared ethylene copolymers, the amount of units which are derived from incorporated comonomers is preferably from 0.01 wt.% to 25 wt.%, more preferably from 0.05 wt.% to 15 wt.% and in particular from 0.1 wt.% to 12 wt.%. Particular preference is given to processes in which ethylene is copolymerized with from 0.1 wt.% to 12 wt.% of 1-hexene and/or 1-butene and especially from 0.1 wt.% to 12 wt.% of 1-butene.

The polymerization can be carried out using all customary olefin polymerization catalysts. That means the polymerization can be carried out, for example, using Phillips catalysts based on chromium oxide, using titanium-based Ziegler- or Ziegler-Natta-catalysts, using single-site catalysts, or using mixtures of such catalysts. For the purposes of the present disclosure, single-site catalysts are catalysts based on chemically uniform transition metal coordination compounds. Furthermore, it is also possible to use mixtures of two or more of these catalysts for the polymerization of olefins. Such mixed catalysts are often designated as hybrid catalysts. The preparation and use of these catalysts for olefin polymerization are generally known.

Preferred catalysts are of the Ziegler type, preferably comprising a compound of titanium or vanadium, a compound of magnesium and optionally an electron donor compound and/or a particulate inorganic oxide as a support material.

Catalysts of the Ziegler type are usually polymerized in the presence of a cocatalyst. Preferred cocatalysts are organometallic compounds of metals of Groups 1, 2, 12, 13 or 14 of the Periodic Table of Elements, in particular organometallic compounds of metals of Group 13 and especially organoaluminum compounds. Preferred cocatalysts are for example organometallic alkyls, organometallic alkoxides, or organometallic halides.

Preferred organometallic compounds comprise lithium alkyls, magnesium or zinc alkyls, magnesium alkyl halides, aluminum alkyls, silicon alkyls, silicon alkoxides and silicon alkyl halides. More preferably, the organometallic compounds comprise aluminum alkyls and magnesium alkyls. Still more preferably, the organometallic compounds comprise aluminum alkyls, most preferably trialkylaluminum compounds or compounds of this type in which an alkyl group is replaced by a halogen atom, for example by chlorine or bromine. Examples of such aluminum alkyls are trimethylaluminum, triethylaluminum, tri-isobutylaluminum, tri-n-hexylaluminum or diethylaluminum chloride or mixtures thereof.

The process of the present disclosure is a polymerization process carried out in suspension. Such suspension polymerizations, which are also designated as slurry polymerizations, take place in a medium, the so-called suspension medium, which is in liquid or in supercritical state under the conditions in the respective polymerization reactor and in which the produced ethylene polymer is insoluble and forms solid particles. The solids content of the suspension is generally in the range of from 10 to 80 wt. %, preferably in the range of from 20 to 40 wt. %.

The suspension medium, which forms the liquid or supercritical phase of the suspension, commonly comprises as main component a diluent but also comprises further components like, for example, dissolved monomers or comonomers, dissolved cocatalysts or scavengers like aluminum alkyls, dissolved reaction auxiliaries like hydrogen or dissolved reaction products of the polymerization reaction like oligomers or waxes. Suitable diluents should be inert, i.e. should not decompose under reaction conditions. Such diluents are for example hydrocarbons having from 3 to 12 carbon atoms, and in particular saturated hydrocarbons like isobutane, butane, propane, isopentane, pentane, hexane or octane, or a mixture of these. In preferred embodiments, the diluent is a hydrocarbon mixture. For producing hydrocarbon mixtures from a raw material, a less high demand for separating the components of the raw material is needed than for producing a specific hydrocarbon, and accordingly hydrocarbon mixtures are economically more attractive as diluent, but show the same diluent performance as specific hydrocarbons. However, hydrocarbon mixtures may have a boiling point range.

The diluent preferably has a boiling point which is significantly different from those of the monomers and comonomers used in order to make it possible for these starting materials to be recovered from a mixture by distillation. Such diluents are for example hydrocarbons having a boiling point above 40°C or even above 60°C or mixtures comprising a high proportion of these hydrocarbons. Thus, in preferred embodiments of the present disclosure, the polymerization takes place in a liquid suspension medium comprising more than 50 wt.% of saturated hydrocarbons having a boiling point of above 60°C at 0.1 MPa or even comprising more than 80 wt.% of saturated hydrocarbons having a boiling point of above 60°C at 0.1 MPa.

The process of the present disclosure can be carried out using all industrially known suspension polymerization processes at temperatures in the range from 40 to 150°C, preferably from 50 to 130°C and particularly preferably from 60 to 90°C, and under pressures of from 0.1 to 20 MPa and particularly preferably from 0.3 to 5 MPa.

In preferred embodiments of the present disclosure, the polymerization is carried out in a series of at least two polymerization reactors which are connected in series. These reactors are not restricted to any specific design; preferably these reactors are however loop reactors or stirred tank reactors. There is no limit to the number of reactors of such a series, however preferably the series consist of two, three or four reactors and most preferably of two or three reactors. If a series of polymerization reactors is used in the process of the present disclosure, the polymerization conditions in the polymerization reactors can differ, for example by the nature and/or the amount of comonomers or by different concentrations of polymerization auxiliaries such as hydrogen. Preferably, the polymerization is a suspension polymerization in stirred tank reactors.

The ethylene polymers are usually obtained as powder, that means in form of small particles. The particles which have usually a more or less regular morphology and size, depending on the catalyst morphology and size, and on polymerization conditions. Depending on the catalyst used, the particles of the polyolefin powder usually have a mean diameter of from a few hundred to a few thousand micrometers. In the case of chromium catalysts, the mean particle diameter is usually from about 300 to about 1600 µm, and in the case of Ziegler type catalysts the mean particle diameter is usually from about 50 to about 3000 µm. Preferred polyolefin powders have a mean particle diameter of from 100 to 250 µm. The particle size distribution can, for example, advantageously be determined by sieving. Suitable technics are e.g. vibrating sieve analysis or sieve analysis under an air jet.

The density of preferred ethylene polymers obtained by the process of the present disclosure is from 0.90 g/cm³ to 0.97 g/cm³. Preferably the density is in the range of from 0.920 to 0.968 g/cm³ and especially in the range of from 0.945 to 0.965 g/cm³. The density has to be understood as being the density determined according to DIN EN ISO 1183-1:2004, Method A (Immersion) with compression molded plaques of 2 mm thickness which were pressed at 180°C, 20MPa for 8 minutes with subsequent crystallization in boiling water for 30 minutes.

In preferred embodiments, the polyethylenes prepared by the process of the present disclosure have a MFR_{21.6} at a temperature of 190°C under a load of 21.6 kg, determined according to DIN EN ISO 1133:2005, condition G, from 0.5 to 300 g/10 min, more preferably from 1 to 100 g/10 min, even more preferably of from 1.2 to 100 g/10 min and in particular from 1.5 to 50 g/10 min.

The ethylene polymers obtained by the process of the present disclosure can be mono-modal, bimodal or multimodal ethylene polymers. Preferably, the ethylene polymers are bimodal or multimodal ethylene polymers. The term "multimodal" hereby refers to the modality of the obtained ethylene copolymer and indicates that the ethylene copolymer comprises at least two fractions of polymer which are obtained under different reaction conditions, independently whether this modality can be recognized as separated maxima in a gel permeation chromatography (GPC) curve or not. The different polymerization conditions can, for example, be achieved by using different hydrogen concentrations and/or by using different comonomer concentrations in different polymerization reactors. Such polymers can be obtained from polymerizing olefins in a series of two or more polymerization reactors under different reaction conditions. It is however also possible to obtain such bimodal or multimodal polyolefins by employing mixed catalysts. In addition to the molecular weight distribution, the polyolefin can also have a comonomer distribution, wherein preferably the average comonomer content of polymer chains with a higher molecular weight is higher than the average comonomer content of polymer chains with a lower molecular weight. The term "multimodal" as used herein shall include also "bimodal".

In preferred embodiments of the process of the present disclosure, the polymerization is carried out in a series of polymerization reactors and an ethylene homopolymer, preferably a low molecular weight ethylene homopolymer, is prepared in the first polymerization reactor and an ethylene copolymer, preferably a high molecular weight ethylene copolymer is prepared in a subsequent polymerization reactor. To be able to prepare an ethylene homopolymer in the first polymerization reactor, no comonomer is fed to the first polymerization reactor, neither directly nor as component of a feed stream or a recycle stream which is introduced into the first polymerization reactor of the series of polymerization reactors. The so obtained multimodal ethylene copolymers preferably comprise from 35 to 65 % by weight of ethylene homopolymer prepared in the first polymerization reactor and from 35 to 65 % by weight of ethylene copolymer prepared in the subsequent polymerization reactor. If the series of polymerization reactors comprises one are more prepolymerization reactors, the prepolymerization is preferably carried without adding comonomers.

In other preferred embodiments of the present disclosure, the ethylene polymer is prepared in a series of three polymerization reactors, i.e. in a first polymerization reactor and two subsequent polymerization reactors, wherein the ethylene polymer prepared in the first polymerization reactor is an ethylene homopolymer, preferably a low molecular weight ethylene homopolymer, the polyethylene prepared in one of the subsequent polymerization reactors is an ethylene copolymer, preferably a high molecular weight copolymer, and the polyethylene prepared in the other subsequent polymerization reactor is an ethylene copolymer of a higher molecular weight, preferably an ultrahigh molecular weight copolymer. The so obtained multimodal ethylene copolymers preferably comprise from 30 to 60 % by weight, more preferably from 45 to 55 % by weight of ethylene homopolymer prepared in the first polymerization reactor, from 30 to 65 % by weight, more preferably from 20 to 40 % by weight of ethylene copolymer prepared in one subsequent polymerization reactor, and from 1 to 30 % by weight, more preferably from 15 to 30 % by weight of higher molecular weight ethylene copolymer prepared in the other subsequent polymerization reactor.

In the process of the present disclosure, the suspension of ethylene polymer formed in the polymerization reactor or the series of polymerization reactors is transferred into a solid-liquid separator, in which the ethylene polymer particles are separated from the suspension medium. This separation into ethylene polymer particles and mother liquor can be carried out in all suitable separation apparatuses such as centrifuges, decanters, filters or combinations thereof. Preferably, the solid-liquid separator is a centrifuge. In preferred embodiments of the present disclosure, the suspension withdrawn from the polymerization reactor or the series of polymerization reactors is first transferred into a separator feed vessel and then conveyed from the separator feed vessel to the solid-liquid separator.

The term "mother liquor" as used herein refers to the separated suspension medium obtained from the suspension in the solid-liquid separator. Typically, the mother liquor comprises more than 70 wt. % of diluent. Further components of the mother liquor include ethylene, comonomers, aluminum alkyls, and hydrogen and dissolved reaction products like oligomers and waxes. The term "oligomer" as used herein refers to hydrocarbons which have a higher molecular weight than the diluent and the comonomer or the comonomers and which are liquid at standard pressure and room temperature. The term "wax" as used herein refers to hydrocarbons which are solved in the mother liquor and which are, after evaporation of the diluent and the oligomers, solid at standard pressure and room temperature. In preferred embodiments, the mother liquor comprised from 75 to 99 wt.%, preferably from 80 to 98 wt.% diluent; from 1 to 20 wt.%, preferably from 2 to 10 wt.% oligomers; from 0 to 5 wt.%, preferably from 0.3 to 3 wt.% comonomer or comonomers; from 0 to 3 wt.%, preferably from 0.2 to 2 wt.% waxes, from 0 to 1 wt.%, preferably from 0.001 to 0.1 wt.% ethylene, from 0 to 0.1 wt.% hydrogen and from 0.1 to 2.5 mmol/l aluminum alkyls or reaction products of aluminum alkyls.

The ethylene polymer particles obtained in the solid-liquid separator still contain suspension medium, i.e. the ethylene polymer particles are "wet". The wet ethylene polymer particles typically contain from 15 wt.% to 40 wt.% and preferably from 20 wt.% to 35 wt.% of suspension medium, i.e. of mother liquor. In the process of the present disclosure, the separated ethylene polymer particles are dried by contacting the particles with a gas stream, thereby forming a gas stream carrying a hydrocarbon load. The drying can occur in any kind of suitable equipment in which a powder can be contacted, and preferably be countercurrently contacted with a gas stream for taking up suspension medium attached to or included in the ethylene polymer particles. Such powder dryers are preferably operated with hot nitrogen which is circulated in a closed loop. The drying is preferably carried out in a two-stage dryer in which residual suspension medium is stripped from the ethylene polymer particles in two subsequent stages. The dried ethylene polymer particles are preferably pneumatically conveyed to an extrusion section in which suitable amounts of additives are added and the mixture is molten, homogenized and pelletized. In preferred embodiments, the dried ethylene polymer particles coming from the powder dryer first pass a degassing unit and/or a powder treatment unit before being conveyed to the extrusion section.

In the process of the present disclosure, the hydrocarbon load taken up by the gas stream for drying the wet ethylene polymer particles is subsequently separated from the gas stream, thereby forming a liquid hydrocarbon recover stream. Such separation can, for example, occur by condensation. In preferred embodiments, the hydrocarbon load is separated from the gas stream in a scrubber into which a cooled liquid phase is introduced. In such an embodiment, the liquid phase which has taken up the hydrocarbon load from the gas stream coming from the dryer forms the liquid hydrocarbon recover stream. The liquid hydrocarbon recover stream is withdrawn from the bottom of the scrubber and a part of this stream is returned to the scrubber as cooled liquid phase after having passed a cooler. At least a part of the remaining portion of the liquid hydrocarbon recover stream withdrawn from the bottom of the scrubber is returned to the polymerization process.

Preferably, the gas stream coming from the dryer passes a particle removing equipment such as a filter or a cyclone before the hydrocarbon load is separated from the gas stream.

Preferably, most of the mother liquor is recycled to the polymerization reactor or the series of polymerization reactors. If the polymerization is carried out in a series of polymerization reactors, preferably all polymerization reactors of the series of polymerization reactors are provided with recycled parts of the mother liquor. Preferably, from 90 to 99.99 wt.%, more preferably from 95 to 99,5 wt.%, and in particular from 98 to 99 wt.% of the mother liquor are recycled to the polymerization reactor or the series of polymerization reactors. The parts of the mother liquor which are not recycled include, for example, continuous flushings of pumps, off-gas which may be vented to purge gaseous impurities of the feed streams or gaseous by-products of the polymerization process or dissolved reaction products like waxes which are intentionally removed from the mother liquor.

The mother liquor is preferably first fed to a mother liquor collecting vessel and, for being recycled to the polymerization process, the mother liquor is withdrawn from the mother liquor collecting vessel.

The mother liquor can be recycled to the polymerization reactor or the series of polymerization reactors as such, or the mother liquor can be recycled in worked-up form. In the process of the present disclosure, a part of the mother liquor is worked up in a work-up section for producing worked-up components of the mother liquor. Work-up in the context of the present disclosure means that a composition is separated in one or more separated compositions or that one or more components of a composition are removed from the composition and a purified composition void of or at least substantially depleted in the removed component(s) is obtained. A work-up can however even go so far that individual components of the composition are isolated. Such a work-up process can, for example, include removing components of the mother liquor, which have a significantly lower boiling point than the diluent, for example ethylene and/or 1-butene, from the mother liquor, and/or removing components of the suspension medium, which have a significantly higher boiling point than the diluent, for example oligomers and/or waxes, from the mother liquor. The amount of mother liquor which passes the work-up section is preferably from 1 to 90 wt.%, more preferably from 5 to 80 wt.% of the mother liquor recycled to the series of polymerization reactors. In preferred embodiments of the work-up process, the mother liquor is separated in two or more components which are recycled to the polymerization in individual recycle circuits. After the separation, each of the individual recycle circuits may comprise further purification steps. Components of the mother liquor, which may be recycled to the series of polymerization reactors in individual recycle circuits, can be, besides the diluent, ethylene and comonomers. The worked-up components of the mother liquor can be transferred to any polymerization reactor used for carrying out the polymerization of the present disclosure.

The work-up section for working up the mother liquor according to the present disclosure comprises an evaporator for producing a wax-depleted portion of the mother liquor. In the process of the present disclosure, a part of the mother liquor to be worked up is transferred into the evaporator and separated into lower boiling point components, which are withdrawn in gaseous form from the evaporator, and a remaining part depleted in lower boiling point components. The evaporated part withdrawn from the evaporator is subsequently preferably condensed and transferred as wax-depleted portion of the mother liquor to the diluent distillation unit. The liquid phase depleted in lower boiling point components which is withdrawn from the evaporator is preferably conveyed as hydrocarbon wax solution to a wax removal unit. The evaporator is preferably a circulation evaporator which is operated by circulating the liquid phase to be evaporated through an external heat exchanger in which the liquid phase is partly vaporized.

For further working up the wax-depleted portion of the mother liquor, the work-up section comprises a diluent distillation unit, which produces isolated diluent from the wax-depleted portion of the mother liquor. In the diluent distillation unit, preferably lower boiling point components of the mother liquor are separated from the diluent by a distillation step. Typically, lower boiling point components are ethylene, hydrogen, those comonomers, which have a lower or a similar boiling point than the used diluent, and parts of the diluent. This means, when, for example, n-hexane or a mixture of hexane isomers is used as diluent and 1-butene is used as comonomer, the majority of the 1-butene comprised in the mother liquor forms a part of the lower boiling point components separated from the diluent in the diluent distillation unit. Preferably, most of the lower boiling point components of the mother liquor are recycled to the polymerizations in individual recycle circuits, most preferably after having passed one or more further work-up steps.

According to the process of the present disclosure, it is also possible to separate higher boiling point components of the mother liquor from the diluent by a distillation step. Such higher boiling point components can be comonomers, which have a boiling point similar to or higher than that of the used diluent. Preferably, most of the higher boiling point components obtained by the distillation are recycled to the polymerizations, most preferably after having passed one or more further work-up steps.

The isolated diluent produced within the diluent distillation unit is at least partly recycled to the polymerization reactor or the series of polymerization reactors. In preferred embodiments of the present disclosure, the isolated diluent is recycled to a polymerization reactor in which an ethylene homopolymer is prepared.

Preferably, from 5 to 70 wt.% of the mother liquor, which is recycled to the polymerization reactor or the series of polymerization reactors, are recycled as isolated diluent to the polymerization reactor or the series of polymerization reactors, more preferably from 10 to 60 wt.% and in particular from 15 to 50 wt.% of the mother liquor are recycled as isolated diluent to the polymerization reactor or the series of polymerization reactors.

In preferred embodiments of the present disclosure, the isolated diluent passes one or more purification steps, thereby obtaining a purified diluent, before being recycled to the polymerization reactor or the series of polymerization reactors. These diluent purification steps can be, for example, a purification by adsorption, a purification by absorption, a catalytic hydrogenation, or a purification by a membrane purification process.

According to the process of the present disclosure, at least the majority of the hydrocarbon recover stream, which is formed by removing the hydrocarbon load from the gas stream used for drying the wet ethylene polymer particles, is transferred to the diluent distillation unit without passing the evaporator for producing the wax-depleted portion of the mother liquor. By not adding the hydrocarbon recover stream to the produced suspension prior to separating the ethylene polymer particles from the mother liquor or to the mother liquor upstream of the evaporator for producing the wax-depleted portion of the mother liquor but transferring the hydrocarbon recover stream as such to the diluent distillation unit, it is possible to decrease the amount of liquid to be evaporated in order produce a wax-depleted portion of the mother liquor and hence to operate the process in an economical and energy efficient manner. Furthermore, this also allows to design the evaporator smaller without having a decline in the amount of produced isolated diluent. Transferring the hydrocarbon recover stream to the diluent distillation unit without passing the evaporator for producing the wax-depleted portion of the mother liquor is possible because the hydrocarbon recover stream originates from the hydrocarbon load of the ethylene polymer particle drying gas stream and is thus a portion of the suspension medium which has previously been evaporated and was then condensed.

In preferred embodiments of the present disclosure, the hydrocarbon recover stream is first passed through a filter before being introduced into the diluent distillation unit in order to prevent fine ethylene polymer particles, which are entrained in the drying gas coming from the powder dryer and end-up in the hydrocarbon recover stream, from being transferred into the diluent distillation unit. The filter is preferably a backwash filter, more preferably an automatic backwash filter. Such self-cleaning filters may utilize backwashing to clean the screen without substantially interrupting of the system flow. Ethylene polymer particles, which are separated from the hydrocarbon recover stream by the backwash filter, are preferably transferred by a part of the hydrocarbon recover stream to the suspension of ethylene polymer particles before being fed into the solid-liquid separator, and are more preferably transferred to the separator feed vessel.

Preferably, the work-up section for working up the mother liquor further comprises a wax removal unit for removing wax from a hydrocarbon wax solution. Wax withdrawn from the polymerization process may be combusted for generating energy or may be sold as by-product of the polymerization process.

In preferred embodiments of the present disclosure, the wax removal unit is operated by direct steam distillation, i.e. by injecting steam directly into a vessel comprising a hydrocarbon wax solution from which wax is removed. By injecting steam, a gaseous hydrocarbon/steam mixture, which comprises primarily diluent and steam, is produced in the wax removal unit.

The hydrocarbon wax solution from which the wax is removed is preferably not mother liquor as obtained in the solid-liquid separator but a liquid phase which has been obtained by withdrawing lower boiling point components from the mother liquor. This separation of mother liquor in lower boiling point components and a remaining part depleted in lower boiling point components preferably occurs by an evaporating step in which a part of the mother liquor is evaporated. Preferably, the evaporated part of the mother liquor obtained in the evaporating step is subsequently condensed and transferred as wax-depleted portion of the mother liquor to the diluent distillation unit. The remaining liquid phase depleted in lower boiling point components is preferably conveyed as hydrocarbon wax solution to the wax removal unit.

Preferably, the gaseous hydrocarbon/steam mixture obtained in the wax removal unit is withdrawn from the wax removal unit, condensed and transferred into a first liquid-liquid separator, in which the mixture is separated in an aqueous phase and a hydrocarbon phase. The aqueous phase obtained in the first liquid-liquid separator is preferably discarded. The hydrocarbon phase obtained in the first liquid-liquid separator may be recycled to a stage of the mother liquor work-up process upstream of the evaporator for producing the wax-depleted portion of the mother liquor, for example by adding to the mother liquor transferred into the work-up section.

In preferred embodiments of the present disclosure, at least a part of the hydrocarbon phase obtained in the first liquid-liquid separator is transferred to the diluent distillation unit without passing the evaporator for producing the wax-depleted portion of the mother liquor. Such a transfer of the hydrocarbon phase obtained in the first liquid-liquid separator to the diluent distillation unit further decreases the amount of liquid to be evaporated in order produce a wax-depleted portion of the mother liquor, and hence reduces the energy consumption in this unit.

In preferred embodiments of the present disclosure, the part of the hydrocarbon phase obtained in the first liquid-liquid separator, which is transferred to the diluent distillation unit without passing the evaporator for producing the wax-depleted portion of the mother liquor, is directly transferred to the diluent distillation unit.

In other preferred embodiments of the present disclosure, the part of the hydrocarbon phase obtained in the first liquid-liquid separator, which is transferred to the diluent distillation unit without passing the evaporator for producing the wax-depleted portion of the mother liquor, is passed through a second liquid-liquid separator and therein further depleted in water content by separating into a second aqueous phase and a second hydrocarbon phase and the second hydrocarbon phase is transferred to the diluent distillation unit. The aqueous phase withdrawn from the second liquid-liquid separation vessel is preferably returned to the first liquid-liquid separation vessel. By passing the hydrocarbon phase obtained in the first liquid-liquid separator through a second liquid-liquid separator, an improved separator efficiency of the separation step into a hydrocarbon phase and an aqueous phase can be achieved. For example, possible disturbances within the first liquid-liquid separator with regard to the separation performance may be caught up by the second liquid-liquid separator, preventing a breakthrough of too much water into the distillation unit and hence affecting the quality of the isolated diluent exiting the distillation unit.

In preferred embodiments, the second liquid-liquid separator is equipped with a coalescer. A coalescer is a technological device which is primarily used to facilitate the separation of emulsions, such as hydrocarbon/water mixtures, into their components.

In further preferred embodiments, the first liquid-liquid separator or the second liquid-liquid separator or, preferably, the first liquid-liquid separator and the second liquid-liquid separator are equipped with level and separation layer measurement devices which use high frequency microwave impulses along a rod sensor which are reflected from the respective layer surface. The time between sending and receiving is being used for the level indication.

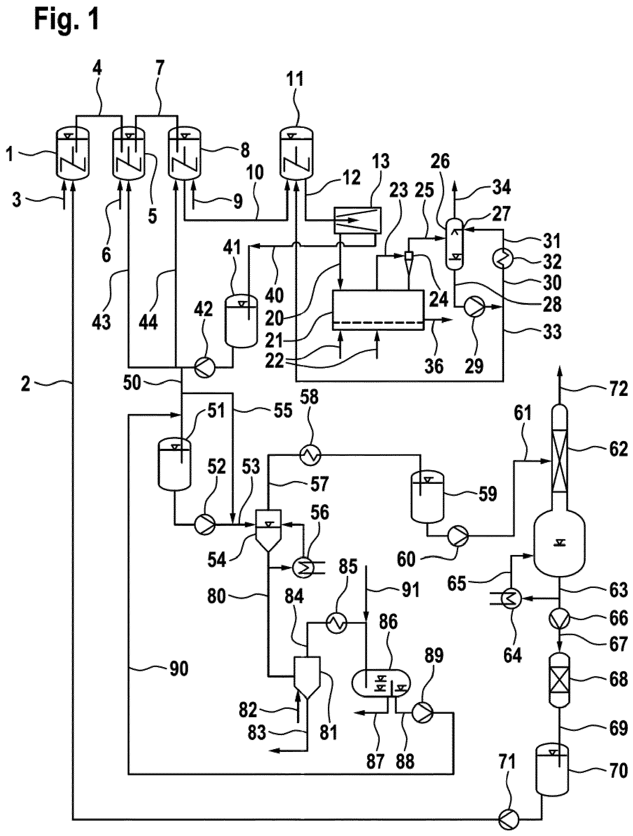

Figure 1 shows schematically a set-up for preparing multimodal ethylene polymers in a series of three polymerization reactors by a suspension polymerization process using hexane as diluent.

For homopolymerizing ethylene or copolymerizing ethylene with other olefins in a first polymerization reactor (1) in suspension, recycled hexane is fed to the reactor (1) via feeding line (2). The other components of the reaction mixture like catalyst, ethylene and polymerization auxiliaries and optional components like possible comonomers and/or directly recycled mother liquor are fed to the reactor via one or more feeding lines (3).

As result of the polymerization in reactor (1), a suspension of solid ethylene polymer particles in a suspension medium is formed. This suspension is fed via line (4) to the second polymerization reactor (5) where further polymerization occurs. Fresh comonomer or further components of the reaction mixture can be fed to reactor (5) via one or more feeding lines (6). Directly recycled mother liquor can be fed to reactor (5) via line (43).

The suspension of reactor (5) is thereafter fed via line (7) to the third polymerization reactor (8) in which additional polymerization is carried out. One or more feeding lines (9) allow supplementary feeding of comonomer or further components of the reaction mixture to reactor (8). Within polymerization reactor (8), further polymerization occurs. Directly recycled mother liquor can be fed to reactor (8) via line (44).

The suspension of ethylene polymer particles in the suspension medium formed in reactor (8) is continuously transferred via line (10) to separator feed vessel (11). The suspension is then passed via line (12) to centrifuge (13), where the suspension is separated in solid ethylene polymer particles and mother liquor, i.e. recovered liquid suspension medium.

The isolated wet ethylene polymer particles are transferred via line (20) to a powder dryer (21). For removing residual parts of the suspension medium, which is primarily hexane, from the ethylene polymer particles, hot nitrogen is introduced into powder dryer (21) through one or more lines (22). Nitrogen, which has taken up the evaporated parts of the suspension medium, primarily hexane, is conveyed via line (23) to a cyclone (24) and then via line (25) to scrubber (26). For recovering hexane from the nitrogen stream conveyed to scrubber (26), a cooled liquid phase is fed into scrubber (26) at position (27). The introduced liquid is then withdrawn from scrubber (26) together with washed-out hexane through line (28) forming a liquid hexane recover stream. A part of this hexane recover stream is recycled by pump (29) via lines (30) and (31) through heat exchanger (32) to scrubber (26) for being fed at position (27). The remainder of the hexane recover stream is transferred via line (33) to separator feed vessel (11). Nitrogen depleted in hexane leaves scrubber (26) at the top via line (34). Dried ethylene polymer particles are discharged from powder dryer (21) via line (36) and conveyed to a vessel for treating the ethylene polymer particles with a nitrogen/steam gas mixture and finally to a pelletizing unit (not shown).

The mother liquor obtained in centrifuge (13) is transferred via line (40) to a mother liquor collecting vessel (41). From there, mother liquor can be recycled by means of pump (42) via lines (43) and (44) to polymerization reactor (5) and/or polymerization reactor (8).

For work-up, mother liquor is branched-off line (43) and transferred via line (50) to mother liquor tank (51). From there, mother liquor is transferred by means of pump (52) via line (53) to an evaporator (54). Line (55) which branches off line (50) allows to feed mother liquor directly from mother liquor collecting vessel (41) to evaporator (54) without passing mother liquor tank (51).

Evaporator (54) is designed as circulation evaporator which is operated by circulating the liquid phase to be evaporated through heat exchanger (56), in which the liquid phase is partly vaporized. The vaporized fractions of the mother liquor are withdrawn from the top of evaporator (54) via line (57), condensed in heat exchanger (58) and transferred into a distillation column feeding vessel (59). From there, the condensed vaporized fractions of the mother liquor are pumped by means of pump (60) via line (61) into a distillation column (62).

Distillation column (62) is operated by branching off a part of the bottom stream withdrawn from distillation column (62) via line (63) and passing the branched-off part of the bottom stream through heat exchanger (64), therein partly vaporizing this stream and returning the heated and partly vaporized part of the bottom stream via line (65) to distillation column (62). The remainder of the bottom stream withdrawn from distillation column (62), which is predominantly hexane, is pumped by pump (66) via line (67) to a hexane purification unit (68) and then via line (69) to a hexane collecting vessel (70). From there, the purified hexane is recycled by means of pump (71) via line (2) as diluent to polymerization reactor (1). Low boiling point components are withdrawn from the top of distillation column (62) via line (72).

A liquid phase enriched in higher boiling point fractions of the mother liquor is withdrawn from the bottom of evaporator (54) via line (80) and transferred to a wax separator vessel (81) which is operated by injecting steam via line (82) directly into wax separator vessel (81). Liquid wax is withdrawn from the bottom of wax separator vessel (81) via line (83) and conveyed to an incineration unit (not shown), e.g. for generation of steam, or to a solidifying unit or liquid shipping unit (not shown) for being sold.

The gaseous fractions obtained in wax separator vessel (81), which comprise primarily hexane and water, are withdrawn from the top of wax separator vessel (81) via line (84), condensed in heat exchanger (85) and transferred into a liquid-liquid separation vessel (86). Further condensed hexane/water mixtures obtained at other positions of the polymerization process, for example the condensed hexane/water mixture withdrawn from the powder treatment vessel, can be transferred into the liquid-liquid separation vessel (86) via line (91).

Water is withdrawn from the liquid-liquid separation vessel (86) via line (87) and transferred to a waste water system (not shown). The hexane phase is withdrawn from the liquid-liquid separation vessel (86) via line (88) and transferred by means of pump (89) via line (90) to mother liquor tank (51).

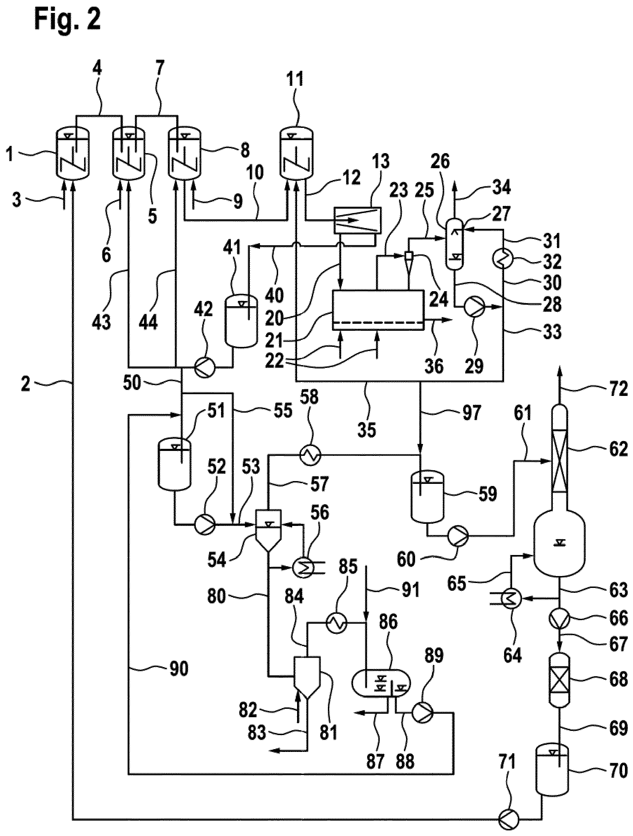

Figure 2 shows schematically a set-up for preparing ethylene polymers in suspension according to the process of the present disclosure.

The process depicted in Figure 2 is a process for preparing multimodal ethylene polymers in a series of three polymerization reactors using hexane as diluent identical with the process shown in Figure 1 except that only a smaller portion of the hexane recover stream withdrawn from scrubber (26) via line (28) is transferred by means of pump (29) via lines (33) and (35) to separator feed vessel (11) and the majority of the hexane recover stream is branched off into line (97) and then transferred into the distillation column feeding vessel (59).

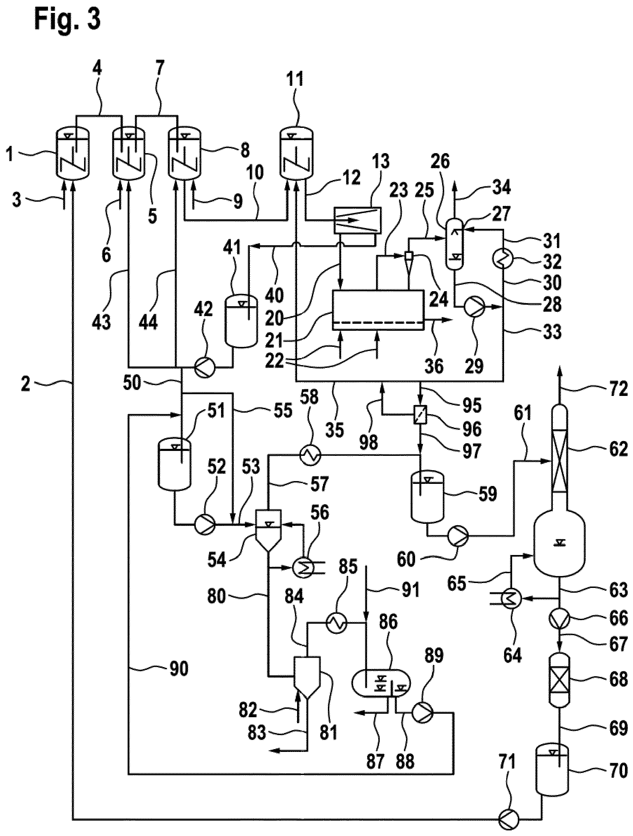

Figure 3 shows schematically a further set-up for preparing ethylene polymers in suspension according to the process of the present disclosure.

The process shown in Figure 3 is similar to the process in depicted Figure 2 except that the hexane recover stream branched off into line (95) is not directly transferred into the distillation column feeding vessel (59) but first passed through a backwash filter (96) and then transferred via line (97) to the distillation column (62). The entrained ethylene polymer particles, which are separated from the hexane recover stream in backwash filter (96), are fed into line (35) via line (98) and then transferred to separator feed vessel (11).

The process of the present disclosure allows in an economical and energy efficient manner to work up the mother liquor, which is obtained by removing the prepared ethylene polymer particles from a suspension obtained in a suspension polymerization process for preparing ethylene polymers, to give purified diluent by minimizing the amount of mother liquor that has to be evaporated.

### EXAMPLES

### Comparative Example A

Ethylene was polymerized in a continuous process in three reactors arranged in series as shown in Figure 1. A Ziegler catalyst component prepared as specified in WO 91/18934, Example 2 and having there the operative number 2.2, was fed into the first reactor (1) in an amount of 2.6 mol/h with respect to the titanium content of the catalysts compound, together with 69 mol/h of triethylaluminum, as well as sufficient amounts of hexane as diluent, ethylene, and hydrogen. The amount of ethylene (= 24.1 t/h) and the amount of hydrogen (= 21.7 kg/h) were adjusted so that the percentage proportion of ethylene and of hydrogen measured in the gas space of the first reactor were 20% by volume of ethylene and 62% by volume of hydrogen and the remainder was a mix of nitrogen and vaporized diluent.

The polymerization in the first reactor (1) was carried out at 84°C.

The suspension from the first reactor (1) was then transferred into the second reactor (5), in which the percentage proportion of hydrogen in the gas phase had been reduced to 0.5% by volume, and an amount of 12.8 t/h of ethylene was added to this reactor together with an amount of 397 kg/h of 1-butene. The amount of hydrogen was reduced by way of intermediate H₂ depressurization. 64 % by volume of ethylene, 0.5% by volume of hydrogen, and 6.0% by volume of 1-butene were measured in the gas phase of the second reactor, the remainder being a mix of nitrogen and vaporized diluent.

The polymerization in the second reactor (5) was carried out at 85°C.

The suspension from the second reactor (5) was transferred to the third reactor (8) using further intermediate H₂ depressurization to reduce the amount of hydrogen to less than 0.08% by volume in the gas space of the third reactor.

An amount of 10.3 t/h of ethylene was added to the third reactor (8) together with an amount of 476 kg/h of 1-butene. 72% by volume of ethylene, 0.05% by volume of hydrogen, and 6.8% by volume of 1-butene were measured in the gas phase of the third reactor, the remainder being a mix of nitrogen and vaporized diluent.

The polymerization in the third reactor (8) was carried out at a pressure at 84°C.

The suspension from the third reactor (8) was transferred to separator feed vessel (11).

The work-up of the suspension discharged from the separator feed vessel (11) via line (12) occurred as depicted in Figure 1. The suspension was separated in centrifuge (13) in solid ethylene polymer particles and mother liquor. The isolated wet ethylene polymer particles were dried in powder dryer (21) by a stream of hot nitrogen. Evaporated parts of the hexane, which were removed from the wet ethylene polymer particles in powder dryer (21), were recovered by washing in scrubber (26) the gas stream leaving the powder dryer (21). The recovered liquid phase was transferred back to separator feed vessel (11) via line (33).

The mother liquor obtained in centrifuge (13) was partly recycled to the second and third polymerization reactors (5) and (8) and partly worked up by being transferred via line (53) to an evaporator (54), in which the liquid phase is partly vaporized. Evaporator (54) is designed as circulation evaporator which is operated by circulating the liquid phase to be evaporated through a heat exchanger (56). The vaporized fractions of the mother liquor are transferred via line (57) into a distillation column feeding vessel (59), and from there by means of a pump (60) via line (61) into a distillation column (62), in which low boiling point components are separated off. A part of the bottom stream of distillation column (62) which is predominantly hexane is passed through a hexane purification unit (68) and transferred to the first polymerization reactor (1) via line (2).

A liquid phase enriched in higher boiling point fractions of the mother liquor was withdrawn from the bottom of evaporator (54) via line (80) and transferred to a wax separator vessel (81) which was operated by directly injecting steam through line (82). The gaseous fractions obtained in wax separator vessel (81) were condensed and transferred into a liquid-liquid separation vessel (86) for being separated into water and a hexane phase. The obtained hexane phase was combined with the parts of the mother liquor to be worked up and transferred via line (53) to evaporator (54).

The flow rates and compositions of selected streams in the mother liquor work-up process are presented in Table 1.

**Table 1**

| stream in line | total flow | hexane | 1-butene | wax | polyethylene particles |
|---|---|---|---|---|---|
| | [kg/h] | [kg/h] | [kg/h] | [kg/h] | [kg/h] |
| 2 | 42 685 | 42 681 | 4 | 0 | 0 |
| 12 | 179 141 | 129 270 | 1 014 | 1 863 | 46 923 |
| 33 | 15 390 | 15 292 | 94 | 0 | 1 |
| 50 | 50 150 | 49 140 | 373 | 620 | 0 |
| 53 | 54 410 | 53 373 | 389 | 620 | 0 |
| 57 | 50 274 | 49 865 | 384 | 0 | 0 |
| 61 | 50 274 | 49 865 | 384 | 0 | 0 |
| 80 | 4 136 | 3 508 | 5 | 620 | 0 |

For evaporating the fractions of the mother liquor to be transferred into the distillation column (62), heat exchanger (56) had to be provided with steam having a thermal output of 7433 kW.

Distillation column (62) and pump (66) could be operated for several years without any required shut-downs for cleaning purposes.

### Example 1

The polymerization of Comparative Example A was repeated, however the work-up of the suspension discharged from the separator feed vessel (11) via line (12) occurred as depicted in Figure 2.

In contrast to the work-up carried out in Comparative Example A, the liquid phase recovered from the nitrogen stream used to dry the wet ethylene polymer particles in powder dryer (21) was not completely transferred back to separator feed vessel (11) but the majority of the hexane recover stream was transferred via line (97) into distillation column feeding vessel (59) and only a small portion of the hexane recover stream withdrawn from scrubber (26) was transferred back to separator feed vessel (11) via line (35).

The flow rates and compositions of selected streams in the mother liquor work-up process are presented in Table 2.

**Table 2**

| stream in line | total flow | hexane | 1-butene | wax | polyethylene particles |
|---|---|---|---|---|---|
| | [kg/h] | [kg/h] | [kg/h] | [kg/h] | [kg/h] |
| 2 | 42 685 | 42 681 | 4 | 0 | 0 |
| 12 | 179 141 | 129 270 | 1 014 | 1 863 | 46 923 |
| 33 | 15 390 | 15 292 | 94 | 0 | 1 |
| 35 | 155 | 153 | 1 | 0 | 0 |
| 50 | 34 925 | 34 001 | 280 | 620 | 0 |
| 53 | 39 177 | 38 234 | 296 | 620 | 0 |
| 57 | 35 040 | 34 726 | 291 | 0 | 0 |
| 61 | 50 274 | 49 865 | 384 | 0 | 1 |
| 80 | 4 137 | 3 508 | 5 | 620 | 0 |
| 97 | 15 235 | 15 139 | 93 | 0 | 1 |

For evaporating the fractions of the mother liquor to be transferred into the distillation column (62), heat exchanger (56) had to be provided with steam having a thermal output of 5351 kW. With respect to Comparative Example A, the reduced flow of mother liquor to heat exchanger (56) allowed a 28% reduction of energy supplied to heat exchanger (56) without a reduction in the throughput of the distillation column (62).

Distillation column (62) and pump (66) had to be shut-down regularly for cleaning purposes. Distillation column (62) required a cleaning twice a year, while pump (66) had to be cleaned in average three times a month. Furthermore, an accumulation of ethylene polymer particles still entrained in the hexane stream passing the hexane purification unit (68) within the hexane purification unit (68) could not be ruled out.

### Example 2

The polymerization of Example 1 was repeated, however the work-up of the suspension discharged from the separator feed vessel (11) via line (12) occurred as depicted in Figure 3.

In contrast to the work-up carried out in Example 1, the hexane recover stream was not directly transferred via line (97) into distillation column feeding vessel (59), but the hexane recover stream was passed through a backwash filter (96). The entrained ethylene polymer particles, which were separated from the hexane recover stream in backwash filter (96), were removed from the screen of the backwash filter (96) by a part of the hexane recover stream through line (98) and then transferred to separator feed vessel (11).

The flow rates and compositions of selected streams in the mother liquor work-up process are presented in Table 2.

**Table 3**

| stream in line | total flow | hexane | 1-butene | wax | polyethylene particles |
|---|---|---|---|---|---|
| | [kg/h] | [kg/h] | [kg/h] | [kg/h] | [kg/h] |
| 2 | 42 685 | 42 681 | 4 | 0 | 0 |
| 12 | 179 141 | 129 270 | 1 014 | 1 863 | 46 923 |
| 33 | 15 390 | 15 292 | 94 | 0 | 1 |
| 35 | 156 | 153 | 1 | 0 | 1 |
| 50 | 34 925 | 34 001 | 280 | 620 | 0 |
| 53 | 39 177 | 38 234 | 296 | 620 | 0 |
| 57 | 35 040 | 34 726 | 291 | 0 | 0 |
| 61 | 50 274 | 49 865 | 384 | 0 | 0 |
| 80 | 4 137 | 3 508 | 5 | 620 | 0 |
| 95 | 15 360 | 15 261 | 94 | 0 | 1 |
| 97 | 15 234 | 15 139 | 93 | 0 | 0 |
| 98 | 126 | 122 | 1 | 0 | 1 |

For evaporating the fractions of the mother liquor to be transferred into the distillation column (62), heat exchanger (56) had to be provided with steam having a thermal output of 5351 kW. With respect to Comparative Example A, the reduced flow of mother liquor to heat exchanger (56) allowed a 28% reduction of energy supplied to heat exchanger (56) without a reduction in the throughput of the distillation column (62).

Distillation column (62) and pumps (66) could be operated for more than 2 years without any required shut-downs for cleaning purposes.

## Claims

1. A process for preparing an ethylene polymer in a suspension polymerization in a polymerization reactor or a series of polymerization reactors comprising
polymerizing ethylene or copolymerizing ethylene and one or more C₃-C₁₂-1-alkenes at temperatures of from 40 to 150°C and pressures of from 0.1 to 20 MPa in the presence of a polymerization catalyst and forming a suspension of ethylene polymer particles in a suspension medium comprising a hydrocarbon diluent,
transferring the suspension of ethylene polymer particles into a solid-liquid separator, in which the suspension is separated in wet ethylene polymer particles and mother liquor,
drying the wet ethylene polymer particles by contacting the particles with a gas stream and thereby forming a gas stream carrying a hydrocarbon load, and thereafter separating the hydrocarbon load from the gas stream and thereby forming a liquid hydrocarbon recover stream,
transferring a part of the mother liquor into a work-up section comprising an evaporator for producing a wax-depleted portion of the mother liquor and comprising a diluent distillation unit, which produces isolated diluent from the wax-depleted portion of the mother liquor, and
recycling at least a part of the isolated diluent produced in the diluent distillation unit to the polymerization reactor or the series of polymerization reactors,
wherein at least the majority of the hydrocarbon recover stream is transferred to the diluent distillation unit without passing the evaporator for producing the wax-depleted portion of the mother liquor.

2. The process of claim 1, wherein the hydrocarbon recover stream transferred to the diluent distillation unit is passed through a filter before being introduced into the diluent distillation unit.

3. The process of claim 2, wherein the filter is a backwash filter.

4. The process of claim 3, wherein the ethylene polymer particles, which are separated from the hydrocarbon recover stream by the backwash filter, are transferred by a part of the hydrocarbon recover stream to the suspension of ethylene polymer particles upstream of the solid-liquid separator.

5. The process of any of claims 1 to 4, wherein the hydrocarbon recover stream is formed by contacting the gas stream carrying the hydrocarbon load with a cooled liquid phase in a scrubber and withdrawing the hydrocarbon recover stream from the bottom of the scrubber, and the cooled liquid phase which is introduced into the scrubber for being contacted with the gas stream carrying the hydrocarbon load is a cooled part of the hydrocarbon recover stream withdrawn from the bottom of the scrubber.

6. The process of any of claims 1 to 5, wherein the work-up section additionally comprises a wax removal unit operated by direct steam distillation for removing wax from a hydrocarbon wax solution, which wax removal unit produces a gaseous hydrocarbon/steam mixture which is condensed and then separated, within a first liquid-liquid separator, into an aqueous phase and a hydrocarbon phase, and at least a part of the hydrocarbon phase obtained in the first liquid-liquid separator is transferred to the diluent distillation unit without passing the evaporator for producing the wax-depleted portion of the mother liquor.

7. The process of claim 6, wherein the part of the hydrocarbon phase obtained in the first liquid-liquid separator, which is transferred to the diluent distillation unit without passing the evaporator for producing the wax-depleted portion of the mother liquor, is directly transferred to the diluent distillation unit.

8. The process of claim 6, wherein the part of the hydrocarbon phase obtained in the first liquid-liquid separator, which is transferred to the diluent distillation unit without passing the evaporator for producing the wax-depleted portion of the mother liquor, is transferred to a second liquid-liquid separator and therein separated into a second aqueous phase and a second hydrocarbon phase and the second hydrocarbon phase is transferred to the diluent distillation unit.

9. The process of claim 8, wherein the second liquid-liquid separator is equipped with a coalescer.

10. The process of claim 8 or 9, wherein the aqueous phase withdrawn from the second liquid-liquid separation vessel is returned to the first liquid-liquid separation vessel.

11. The process of any of claims 1 to 10, wherein the prepared ethylene polymer is a multimodal ethylene copolymer.

12. The process of claim 11, wherein the preparation of the ethylene polymer is carried out in a series of polymerization reactors and an ethylene homopolymer is prepared in one of the polymerization reactors.

13. The process of claim 12, wherein the ethylene homopolymer is prepared in the first polymerization reactor of the series of polymerization reactors and a copolymer of ethylene is prepared in a subsequent polymerization reactor.

## Patentansprüche

1. Verfahren zur Herstellung eines Ethylenpolymers in einer Suspensionspolymerisation in einem Polymerisationsreaktor oder einer Reihe von Polymerisationsreaktoren, umfassend
Polymerisieren von Ethylen oder Copolymerisieren von Ethylen und einem oder mehreren C₃-C₁₂-1-Alkenen bei Temperaturen von 40 bis 150°C und Drücken von 0,1 bis 20 MPa in Gegenwart eines Polymerisationskatalysators und Bilden einer Suspension von Ethylenpolymerpartikeln in einem Suspensionsmedium, umfassend ein Kohlenwasserstoffverdünnungsmittel,
Überführen der Suspension von Ethylenpolymerpartikeln in einem Fest-Flüssig-Separator, in dem die Suspension in feuchte Ethylenpolymerpartikel und Mutterlauge getrennt wird,
Trocknen der feuchten Ethylenpolymerpartikel, indem die Partikel mit einem Gasstrom kontaktiert werden und dadurch ein Gasstrom gebildet wird, der eine Kohlenwasserstofflast trägt, und danach die Kohlenwasserstofflast von dem Gasstrom getrennt und dadurch flüssiger Kohlenwasserstoffrückgewinnungsstrom gebildet wird,
Überführen eines Teils der Mutterlauge in einen Aufarbeitungsabschnitt, umfassend einen Verdampfer, um einen wachsabgereicherten Anteil der Mutterlauge zu produzieren, umfassend eine Verdünnungsmitteldestillationseinheit, die isoliertes Verdünnungsmittel aus dem wachsabgereicherten Anteil der Mutterlauge produziert und
Recyceln von mindestens einem Teil des in der Verdünnungsmitteldestillationseinheit produzierten isolierten Verdünnungsmittels in den Polymerisationsreaktor oder die Reihe von Polymerisationsreaktoren,
wobei mindestens ein Großteil des Kohlenwasserstoffrückgewinnungsstrom in die Verdünnungsmitteldestillationseinheit überführt wird, ohne den Verdampfer zur Produktion des wachsabgereicherten Anteils der Mutterlauge zu durchlaufen.

2. Verfahren nach Anspruch 1, wobei der Kohlenwasserstoffrückgewinnungsstrom, der in die Verdünnungsmitteldestillationseinheit überführt wird, durch einen Filter geleitet wird, bevor er in die Verdünnungsmitteldestillationseinheit eingebracht wird.

3. Verfahren nach Anspruch 2, wobei der Filter ein Rückspülfilter ist.

4. Verfahren nach Anspruch 3, wobei die Ethylenpolymerpartikel, die durch den Rückspülfilter von dem Kohlenwasserstoffrückgewinnungsstrom entfernt werden, durch ein Teil des Kohlenwasserstoffrückgewinnungsstroms in die Suspension der Ethylenpolymerpartikel stromaufwärts des Fest-Flüssig-Separators überführt werden.

5. Verfahren nach einem der Ansprüche 1 bis 4, wobei der Kohlenwasserstoffrückgewinnungsstrom gebildet wird, indem der die Kohlenwasserstofflast tragende Gasstrom mit einer gekühlten flüssigen Phase in einem Wäscher kontaktiert wird und der Kohlenwasserstoffrückgewinnungsstrom aus dem Sumpf des Wäschers abgezogen wird, und die gekühlte flüssige Phase, die in den Wäscher eingebracht wird, um mit dem die Kohlenwasserstofflast tragenden Gasstrom kontaktiert zu werden, ein gekühltes Teil des Kohlenwasserstoffrückgewinnungsstroms ist, der aus dem Sumpf des Wäschers abgezogen wird.

6. Verfahren nach einem der Ansprüche 1 bis 5, wobei der Aufarbeitungsabschnitt zusätzlich eine Wachsentfernungseinheit aufweist, die durch direkte Wasserdampfdestillation betrieben wird, um Wachs aus einer Kohlenwasserstoffwachslösung zu entfernen, wobei die Wachsentfernungseinheit eine gasförmige Kohlenwasserstoff-/Wasserdampfmischung produziert, die kondensiert und dann innerhalb eines ersten Flüssig-Flüssig-Separators in eine wässrige Phase und eine Kohlenwasserstoffphase getrennt wird, und mindestens ein Teil der in dem ersten Flüssig-Flüssig-Separator erhaltenen Kohlenwasserstoffphase in die Verdünnungsmitteldestillationseinheit überführt wird, ohne den Verdampfer zur Produktion des wachsabgereicherten Anteils der Mutterlauge zu durchlaufen.

7. Verfahren nach Anspruch 6, wobei das Teil der in dem ersten Flüssig-Flüssig-Separator erhaltenen Kohlenwasserstoffphase, das in die Verdünnungsmitteldestillationseinheit überführt wird, ohne den Verdampfer zur Produktion des wachsabgereicherten Anteils der Mutterlauge zu durchlaufen, direkt in die Verdünnungsmitteldestillationseinheit überführt wird.

8. Verfahren nach Anspruch 6, wobei das Teil der in dem ersten Flüssig-Flüssig-Separator erhaltenen Kohlenwasserstoffphase, das in die Verdünnungsmitteldestillationseinheit überführt wird, ohne den Verdampfer zur Produktion des wachsabgereicherten Anteils der Mutterlauge zu durchlaufen, in einen zweiten Flüssig-Flüssig-Separator überführt und darin in eine zweite wässrige Phase und eine zweite Kohlenwasserstoffphase getrennt wird und die zweite Kohlenwasserstoffphase in die Verdünnungsmitteldestillationseinheit überführt wird.

9. Verfahren nach Anspruch 8, wobei der zweite Flüssig-Flüssig-Separator mit einem Koaleszer ausgerüstet ist.

10. Verfahren nach Anspruch 8 oder 9, wobei die aus dem zweiten Flüssig-Flüssig-Trenngefäß abgezogene wässrige Phase in das erste Flüssig-Flüssig-Trenngefäß zurückgegeben wird.

11. Verfahren nach einem der Ansprüche 1 bis 10, wobei das hergestellte Ethylenpolymer ein multimodales Ethylencopolymer ist.

12. Verfahren nach Anspruch 11, wobei die Herstellung des Ethylenpolymers in einer Reihe von Polymerisationsreaktoren durchgeführt wird und in einem der Polymerisationsreaktoren ein Ethylenhomopolymer hergestellt wird.

13. Verfahren nach Anspruch 12, wobei das Ethylenhomopolymer in dem ersten Polymerisationsreaktor der Reihe von Polymerisationsreaktoren hergestellt wird und ein Copolymer von Ethylen in einem nachfolgenden Polymerisationsreaktor hergestellt wird.

## Revendications

1. Procédé de préparation d'un polymère d'éthylène dans une polymérisation en suspension dans un réacteur de polymérisation ou une série de réacteurs de polymérisation comprenant
la polymérisation d'éthylène ou la copolymérisation d'éthylène et d'un ou de plusieurs 1-alcènes en C₃₋C₁₂ à des températures de 40 à 150 °C et à des pressions de 0,1 à 20 MPa en présence d'un catalyseur de polymérisation et la formation d'une suspension de particules de polymère d'éthylène dans un milieu de suspension comprenant un diluant hydrocarboné,
le transfert de la suspension de particules de polymère d'éthylène dans un séparateur solide-liquide, dans lequel la suspension est séparée en particules humides de polymère d'éthylène et en liqueur mère,
le séchage des particules humides de polymère d'éthylène par la mise en contact des particules avec un flux gazeux et ainsi la formation d'un flux gazeux transportant une charge hydrocarbonée, puis la séparation de la charge hydrocarbonée à partir du flux gazeux et ainsi la formation d'un flux liquide de récupération d'hydrocarbures,
le transfert d'une partie de la liqueur mère dans une section de traitement comprenant un évaporateur destiné à produire une partie appauvrie en cire de la liqueur mère et comprenant une unité de distillation de diluant, qui produit un diluant isolé à partir de la partie appauvrie en cire de la liqueur mère et
le recyclage d'au moins une partie du diluant isolé produit dans l'unité de distillation de diluant vers le réacteur de polymérisation ou la série de réacteurs de polymérisation,
au moins la majorité du flux de récupération d'hydrocarbures étant transférée à l'unité de distillation de diluant sans passer par l'évaporateur destiné à produire la partie appauvrie en cire de la liqueur mère.

2. Procédé selon la revendication 1, le flux de récupération d'hydrocarbures transféré à l'unité de distillation de diluant étant passé à travers un filtre avant d'être introduit dans l'unité de distillation de diluant.

3. Procédé selon la revendication 2, le filtre étant un filtre de lavage à contre-courant.

4. Procédé selon la revendication 3, les particules de polymère d'éthylène, qui sont séparées à partir du flux de récupération d'hydrocarbures par le filtre de lavage à contre-courant, étant transférées par une partie du flux de récupération d'hydrocarbures à la suspension de particules de polymère d'éthylène en amont du séparateur solide-liquide.

5. Procédé selon l'une quelconque des revendications 1 à 4, le flux de récupération d'hydrocarbures étant formé par la mise en contact du flux gazeux transportant la charge hydrocarbonée avec une phase liquide refroidie dans un épurateur et le soutirage du flux de récupération d'hydrocarbures à partir du fond de l'épurateur et la phase liquide refroidie qui est introduite dans l'épurateur afin d'être mise en contact avec le flux gazeux transportant la charge hydrocarbonée étant une partie refroidie du flux de récupération d'hydrocarbures soutiré du fond de l'épurateur.

6. Procédé selon l'une quelconque des revendications 1 à 5, la section de traitement comprenant en plus une unité d'élimination de cire fonctionnant par distillation directe à la vapeur afin d'éliminer la cire à partir d'une solution de cire hydrocarbonée, laquelle unité d'élimination de cire produit un mélange gazeux hydrocarbures/vapeur qui est condensé puis séparé, à l'intérieur d'un premier séparateur liquide-liquide, en une phase aqueuse et en une phase hydrocarbonée et au moins une partie de la phase hydrocarbonée obtenue dans le premier séparateur liquide-liquide étant transférée à l'unité de distillation de diluant sans passer par l'évaporateur destiné à produire la partie appauvrie en cire de la liqueur mère.

7. Procédé selon la revendication 6, la partie de la phase hydrocarbonée obtenue dans le premier séparateur liquide-liquide, qui est transférée à l'unité de distillation de diluant sans passer par l'évaporateur destiné à produire la partie appauvrie en cire de la liqueur mère, étant directement transférée à l'unité de distillation de diluant.

8. Procédé selon la revendication 6, la partie de la phase hydrocarbonée obtenue dans le premier séparateur liquide-liquide, qui est transférée à l'unité de distillation de diluant sans passer par l'évaporateur destiné à produire la partie appauvrie en cire de la liqueur mère, étant transférée à un second séparateur liquide-liquide et étant séparée dans celui-ci en une seconde phase aqueuse et en une seconde phase hydrocarbonée et la seconde phase hydrocarbonée étant transférée à l'unité de distillation de diluant.

9. Procédé selon la revendication 8, le second séparateur liquide-liquide étant équipé d'un coalesceur.

10. Procédé selon la revendication 8 ou 9, la phase aqueuse soutirée du second récipient de séparation liquide-liquide étant renvoyée au premier récipient de séparation liquide-liquide.

11. Procédé selon l'une quelconque des revendications 1 à 10, le polymère d'éthylène préparé étant un copolymère d'éthylène multimodal.

12. Procédé selon la revendication 11, la préparation du polymère d'éthylène étant effectuée dans une série de réacteurs de polymérisation et un homopolymère d'éthylène étant préparé dans l'un des réacteurs de polymérisation.

13. Procédé selon la revendication 12, l'homopolymère d'éthylène étant préparé dans le premier réacteur de polymérisation de la série de réacteurs de polymérisation et un copolymère d'éthylène étant préparé dans un réacteur de polymérisation ultérieur.
